# EUROPÄISCHE PATENTSCHRIFT

(11) **EP 0 946 258 B1**
(45) Veröffentlichungstag und Bekanntmachung des Hinweises auf die Patenterteilung: **16.01.2002**
(21) Anmeldenummer: 97948830.1
(22) Anmeldetag: 29.10.1997
(51) Int. Cl.: B01D 53/26, B01D 53/04, B65B 1/08

(54) **BEHÄLTER EINER TROCKNUNGSANLAGE MIT ADSORPTIONSMITTEL**
CONTAINER OF A DRYING UNIT INVOLVING AN ADSORBENT
RECIPIENT D'UNE INSTALLATION DE SECHAGE PAR UN AGENT D'ADSORPTION

(30) Priorität: 31.10.1996 DE 19645009
(43) Veröffentlichungstag der Anmeldung: 06.10.1999
(73) Patentinhaber: ultrafilter international AG, 42781 Haan (DE)
(72) Erfinder: EIMER, Klaus, D-40883 Ratingen (DE); SCHUSTER, Hans-Michael, D-42781 Haan (DE); MITTELSTÄDT, Dirk, D-47800 Krefeld (DE)
(74) Vertreter: König, Reimar, Dr.-Ing.
(86) Internationale Anmeldenummer: EP9705966
(87) Internationale Veröffentlichungsnummer: WO9818541

(56) Entgegenhaltungen:
- EP-A- 0 065 019
- DE-A- 3 820 708
- DE-U- 8 518 993
- FR-A- 1 332 418
- US-A- 4 241 769
- US-A- 4 673 420
- US-A- 4 830 643
- US-A- 5 034 039

## Beschreibung

Die vorliegende Erfindung betrifft einen Behälter einer Trocknungsanlage, in dem ein Adsorptionsmittel für ein zu trocknendes Gas angeordnet ist.

Bei der Erzeugung von Gasdruck spielt oftmals für nachfolgende Verbraucher des Gases der Feuchtgehalt im Gas selbst eine wichtige Rolle. Die Qualität des Gases drückt sich daher u. a. in der Zuverlässigkeit der Herstellung eines gewünschten Restfeuchtigkeitgehaltes aus. Um diesen sicherzustellen, ist es bekannt, in Trocknungsanlagen ein Adsorptionsmittel zu verwenden, an dem die im Gas enthaltene Feuchtigkeit adsorbiert. Die trockenen Gasanteile können das Adsorptionsmittel, was beispielsweise in Form eines Granulates vorliegt, passieren. Als Adsorptionsmittel kommen dabei Kieselgel oder Kieselgele, Aluminiumoxid, Molekularsiebe, Aktivkohle oder andere in Betracht. Das Trockenmittel wird dabei gesättigt und in einem Regenerationszyklus wieder regeneriert. Nach einer gewissen Anzahl an Adsorptions- und Regenerierzyklen ist das Trockenmittel so sehr gealtert, daß es ausgetauscht werden muß. Eine derartige Trocknungsanlage, aber auch andere Trockner, werden in einem Prospekt der Firma "Ultrafilter GmbH". Büssingstraße 1, D-42781 Haan, mit dem Titel "Trockene Druckluft. Mit Sicherheit ein reiner Gewinn". Prospektkennzeichnung T997.004.03D 10.95, beschrieben.

In der FR 1 332 418 A ist ein Behälter mit Adsorptionsmittel zur Trocknung eines durchströmenden feuchten Gasstromes beschrieben. Der Behälter weist am Boden einen Gaseinlaß sowie einen Gasauslaß auf. Während des Betriebes ist der Behälter austauschbar in einer Halterung einer Trocknungsanlage eingespannt, wobei das zu trocknende Gas über den Boden des Behälters eingeleitet und nach der Trocknung wieder entnommen wird. Beim Austausch eines solchen Behälters ist eine exakte Positionierung des Behälters auf den angrenzenden Gasleitungen notwendig, wobei sehr viel handwerkliches Geschick erforderlich ist.

Aus der US 5 034 039 A und der DE 85 18 993 U sind Behälter für von Trocknungsanlagen bekannt, welche ein Adsorptionsmittel aufweisen. Beim Durchströmen eines feuchter Gasstrom durch einer solchen Behälter nimmt das Adsorptionsmittel die Feuchtigkeit auf, wobei bis zum Zeitpunkt der Sättigung des Adsorptionsmittels eine bestimmte Restfeuchtigkeit des Gases erzeugt wird. Die Anforderungen an diese Restfeuchtigkeit sind jedoch sehr von der weiteren Verwendung des getrockneten Gasstroms abhängig, wobei eine variable Einstellung der Restfeuchtigkeit bei diesen bekannten Behältern nicht möglich ist.

Um eine definierte Restfeuchte, insbesondere Höchstrestfeuchte, im Gas sicherzustellen, ist bei einer kontinuierlich arbeitenden Anlage neben der schnellen Wiederherstellung der Aufnahmekapazität des verwendeten Adsor- bens auch die Handhabung dieses Adsorptionsmittels in dem Behälter der Trocknungsanlage wichtig. Das Bedienungspersonal der Trocknungsanlage muß in der Lage sein, daß zu sehr gealterte Adsorptionsmittel vollständig aus dem Behälter entfernen zu können, ohne das die Trocknungsanlage langen Stillstandszeiten unterworfen werden braucht.

Aufgabe der vorliegenden Erfindung ist es, einen einfachen aber betriebs- und handhabungssicheren Einsatz von Adsorptionsmittel in einem Behälter einer Trocknungsanlage zu gewährleisten, so daß insbesondere die Qualität des zu trocknenden Gases für nachfolgende Verbraucher permanent sichergestellt ist.

Diese Aufgabe wird mit einem Behälter nach Anspruch 1 gelöst, in dem ein Adsorptionsmittel für ein zu trocknendes Gas angeordnet ist, sowie einer Kartusche nach Anspruch 18. Die Ansprüche 23 und 24 betreffen ein Verfahren zum Befüllen einer Kartusche. Weitere vorteilhafte Merkmale der Erfindung sind in den abhängigen Ansprüchen angegeben.

Ein Behälter einer Trocknungsanlage, in dem ein Adsorptionsmittel für ein zu trocknendes Gas angeordnet ist, mit einer ersten und einer zweiten Kartusche, wobei in zumindest einer Kartusche, die in dem Behälter austauschbar angeordnet ist, sich das Adsorptionsmittel für das zu trocknende Gas in der Kartusche befindet. Dabei herrscht zwischen dem Adsorptionsmittel und der Kartusche ein derartiger Druck, daß das Adsorptionsmittel in der Kartusche unbeweglich ist. Dieses gilt inshesondere auch bei einer sich ändernden Betriebs- und/oder Umgebungsbedingung. Dazu ist das Adsorplionsmittel vorzugsweise so in die Kartusche eingefüllt und in dieser fixiert, daß es auch unter dem Einfluß höherer Gasgeschwindigkeiten unbeweglich ist.

Zur zweckmäßigen Ausnutzung des Innenraumes des Behälters der Trocknungsanlage wird vorteilhafterweise nicht nur eine, sondern mehrere Kartuschen in diesem angeordnet. Auf diese Weise ist es möglich, für verschieden geforderte zu reinigende Gasdurchsätze bei unterschiedlichen Trocknungsanlagen Kartuschen unterschiedlicher Längen und/oder Durchmesser optimal zusammenstellen zu können. Zur Erzielung eines durch die Kartuschen hindurchlaufenden Gasweges werden die Kartuschen beispielsweise aufeinandergestapelt. Dieses erfolgt so, daß die Strömungsführung von einer ersten Kartusche, auf der eine zweite Kartusche aufsitzt, zu dieser gewährleistet ist. Das durchströmende Gas wird durch entsprechende konstruktive Gestaltung im Inneren der Kartusche so auf das Adsorptionsmittel geführt, daß auch dessen gesamte Oberfläche überströmt wird. Um eine Vereinheitlichung von Kartuschen für die Fertigung, aber auch für den Nutzer zu erzielen, ist es vorteilhaft, daß stapelbare Kartuschen zumindest partiell baugleich sind. Dieses vereinfacht den strömungstechnischen Anschluß der ersten mit der zweiten Kartusche. Durch Verwendung eines Mama-Papa-Systems zur Verbindung der ersten und zweiten Kartusche ist weiterhin sichergestellt, daß auch durch Ungeübte oder bei unübersichtlichen bzw. nicht einsehbaren Anordnungen von erster und zweiter Kartusche diese immer korrekt aufeinander zu sitzen kommen. Ungewollte Bypass-Ströme von noch nicht vollständig getrocknetem Gas an der Verbindungsstelle zwischen erster und zweiter Kartusche sind so nicht möglich. Die feste Ausbildung der Kartuschendeckel als gewölbte Böden, wobei ein Boden sich nach innen und der andere Boden sich nach außen wölbt, ist eine bevorzugte Ausführung für eine Kartusche.

Sind in dem Behälter mehrere übereinandergestapelte Kartuschen vorhanden, ermöglicht dieses, Kartuschen mit jeweils unterschiedlicher Befüllung zu verwenden. Dieses kann unterschiedliches Adsorptionsmaterial oder auch Filter beinhalten. Wird in Strömungsrichtung des zu trocknenden Gases durch die übereinandergestapelten Kartuschen in der ersten Kartusche ein wasser- bzw. feuchtefestes Adsorptionsmittel verwendet, ist hei geeigneter Auslegung der Trocknungsanlage es möglich. Mittel in der nachfolgenden Kartusche zu verwenden, auf die beispielsweise Wasser zwar eine ungünstige Wirkung hätte, andererseits die nun verbliebene Restfeuchte zu keiner Schädigung mehr führen kann. Dadurch können nun auch Mittel verwendet werden, die ansonsten nicht einsetzbar sind. beispielsweise Mittel, die Adsorptions- oder Filterwirkung für bestimmte Bestandteile im Gas entfalten.

Zur Verbindung der Kartusche mit einem Teil des Behälters und/oder einer anderen Kartusche besonders bei hohen Drücken weist diese nach Anspruch 19 einen Schraub - oder Bajonettverschluß auf. Dieser Verschluß erzwingt bei sachgemäßer Handhabung die korrekte Abdichtung der miteinander verbundenen Teile. Zur Verhinderung von Bypass-Strömen, welche innerhalb des Behälters nicht erwünscht sind, weist die Kartusche nach Anspruch 1 und 18 einen Ober- und/oder Unterrand auf, der als Dichtung ausgebildet ist. Dieses kann ein Elastomerwulst sein, der in der Lage ist, sich an unterschiedliche Geometrien, auf die die Kartusche aufgesetzt oder angebracht wird, anzupassen, ebenso aber auch eine Dichtlippe oder andere, im Stand der Technik bekannte Dichtungsmaßnahmen.

Bei der direkten Befüllung des Behälters mit dem Adsorptionsmittel ist es aufgrund der oftmals starren Anordnung desselben in der Trocknungsanlage sehr umständlich, das Adsorptionsmittel aus dem Behälter entfernen zu können und eine Neubefüllung so vorzunehmen, daß alle Trockenmittelteilchen unbeweglich liegen und bei der Durchströmung mit Gas oder Luft sich nicht gegeneinander bewegen und verschleißen. Durch die Befüllung einer Kartusche und anschließender Anordnung derselben in dem Behälter wird einerseits sichergestellt, daß mit wenigen Handgriffen ein vollständiger Austausch des Adsorptionsmittels erfolgt, zum anderen der Austausch durch einfaches Ersetzen eines einzigen Bauteiles, der Kartusche, nur wenig Zeit benötigt. Weiterhin ermöglicht die Verwendung der Kartusche mit dem Adsorptionsmittel darin, däß langwierige Kontrollen, ob wirklich das gesamte Adsorptionsmittel aus dem Behälter entfernt worden ist - beispielsweise schwierig in Ecken, Öffnungen, im Bereich von Dichtungen oder ähnlichem - entfallen, weswegen die Verwendung der Kartusche auch den Austausch derselben durch ungeübte Personen ermöglicht.

Ein weiterer Vorteil der Verwendung von Adsorptionsmittel in der Kartusche ist es, daß zwischen beiden ein derartiger Druck initiiert wird, daß das Adsorptionsmittel sich in der Kartusche nicht bewegen kann. Aufgrund der Durchströmung des Adsorptionsmittel durch das feuchte und zu trocknende Gas kommt es ansonsten zu Reibungserscheinungen unter Teilchen des Adsorptionsmittels, beispielsweise bei einem Schüttgut. Diese Reibung führt zu einem Oberflächenschleifen, wodurch feiner Partikelstaub an Adsorptionsmittel entsteht. Diese sehr feinen Partikel geraten ungünstigstenfalls in den der Trocknungsanlage nachfolgenden Gaskreis. Dort sind diese Partikel in der Lage, zu Schädigungen nicht nur an den Gasleitungen, sondern auch in den Gasverbrauchern zu führen. Bei Standzeiten des Adsorptionsmittels in der Trocknungsanlage von einem oder zwei Jahren, gegebenenfalls sogar länger, beispielsweise bei warm- oder kaltregenerierenden Anlagen, führt die Reibung zu einer immer stärker werdenden Oberflächenabnutzung und damit zu einer fortschreitenden schleichenden Lockerung des Adsorptionsmittel selbst. Dieser Effekt wird besonders dadurch verstärkt, daß dass Adsorptionsmittel abwechselnd in entgegengesetzter Richtung durchströmt wird.

Selbst wenn die Befüllung des Adsorptionsmittels im Behälter so erfolgt, daß dort eine satte Füllung vorliegt, führen sich ändernde Betriebs- und/oder Umgebungsbedingungen wie Druck, Temperatur, Gasbestandteile, Durchströmrichtung oder ähnliches zu einer allmählichen Lockerung von Bestandteilen des Adsorptionsmittels. Durch Aufprägung eines Druckes zwischen dem Adsorptionsmittel und der Kartusche wird die Bewegung und der abrasive Verschleiß jedoch auch für lange Standzeiten der Kartusche in dem Behälter der Trocknungsanlage verhindert. Ein weiterer Vorteil dieser Fixierung des Adsorptionsmittels in der Kartusche besteht darin, die Durchströmungsgeschwindigkeit des zu trocknenden Gases durch die Kartusche erhöhen zu können, ohne daß es zu einer quasi Fluidisierung des Adsorptionsmittels kommt.

Eine Ausgestaltung der Erfindung sieht vor, daß die Kartusche zumindest zum überwiegenden Teil aus Kunststoff besteht. Der Kunststoff ist in der Lage, sich dehnen zu können, sei es in axialer oder auch radialer Richtung. Ebenso wie Kunststoff eignet sich auch dünnwandiges metallenes Material oder ähnliches. Eine gewisse Flexibilisierung der Kartusche bei Ausübung von Zug bzw. Druck auf diese ermöglicht es, einen Druckzustand zwischen dem Adsorptionsmittel und der Kartusche auf diese von beiden gebildete Einheit sozusagen immanent aufzuprägen. Die Fertigung der Kartusche kann einstückig erfolgen, beispielsweise mit einer Öffnung zum Befüllen, die später verschlossen wird. Zum Verschließen der Kartusche bieten sich alle kraft- und formschlüssigen Verbindungstechniken an, z. B. für Kunststoffe Kleben, Verschweißen, Verschmelzen.

Eine besonders vorteilhafte Weise, einen ausreichenden Druck zwischen dem Adsorptionsmittel und der Kartusche sicherzustellen, wird durch die Vorspannbarkeit der Kartuschenwand erzielt. Unter Vorspannbarkeit im Sinne der Erfindung ist zu verstehen, daß die Wand eine gewisse Elastizität besitzt, die mittels Druck oder Zug so ausgenutzt wird, daß bei Weglassen der die Spannung oder Druck verursachenden äußeren Kräfte ein Druck zwischen Adsorptionsmittel und Kartusche permanent verbleibt. Diese Vorspannung wird vorteilhafter Weise durch geeignete Ausgestaltung der Kartuschenwand erzielt. Diese weist dafür beispielsweise eine zumindest teilweise umlaufende Sicke auf. Bei Aufbau der Kartuschenwand durch Abschnitte mit unterschiedlichen Elastizitätskoeffizienten und/oder auch Wärmeausdehnungskoeffizienten wird ebenfalls erreicht, daß das eingefüllte Adsorptionsmittel unbeweglich bleibt. Dieses ist gerade beim Transport der Kartusche wichtig, da währenddessen Stöße, Vibrationen und Temperaturänderungen im Bereich von 10°C und mehr ohne weiteres auftreten, die Längenänderungen im Zehntel-Millimeterbereich nach sich ziehen. Die Vorspannung der Kartusche gegenüber dem Adsorptionsmittel wird in einer weiteren Ausgestaltung der Erfindung durch die Anordnung der Kartusche in dem Behälter der Trocknungsanlage erzeugt, beispielsweise durch die Befestigung der Kartusche an einem zum Behälter zugehörigen Deckel, durch den das zu trocknende Gas in die Kartusche zugeführt wird oder durch Befestigung an einem anderen, zum Behälter zugehörigen Bauteil.

Der Druck zwischen der Kartuschenwand und dem Adsorptionsmittel wird in einer weiteren Ausgestaltung der Erfindung durch ein druckausübendes Mittel erzeugt, welches in unmittelbarer Nähe zum Adsorptionsmittel angeordnet ist. Dieses Mittel, beispielsweise eine Feder oder ein elastisches Material, weist derartige Elastizitätseigenschaften auf, daß es einen gewissen Mindestdruck auch über einen längeren Zeitraum aufrechterhalten kann. Für eine Befüllung der Kartusche bzw. Montage der Kartusche im Behälter ist es besonders günstig, wenn das druckausübende Mittel unter eine Vorspannung setzbar ist. Damit wird gewährleistet, daß bei ausreichender Vorspannung immer ein genügend ausreichender Abstand zur Mindestspannung vorhanden ist, die zur notwendigen Fixierung des Adsorptionsmittel in der Kartusche erforderlich ist. Die Feder oder auch das elastische Material können in der Kartusche oder auch im Behälter angeordnet sein. Eine sehr zweckmäßige Ausgestaltung der Kartusche weist zumindest teilweise eine Auskleidung der Innenwand mit einem elastischen Material auf. Bei Einbringung des Adsorptionsmittels in die Kartusche baut sich dann automatisch der Druck auf. Die Auskleidung selbst kann ein Schaum oder auch beispielsweise eine mit Folie überdeckte Gaskammer sein.

Eine besonders vorteilhafte Ausgestaltung weist im Inneren der Kartusche einen elastischen Schlauch auf, beispielsweise ein eingelegter Gummischlauch. Dieser kann lose eingelegt werden und durch das anschließende Befüllen mit Adsorptionsmittel so geweitet werden, daß sich eine permanente Spannung im Schlauch aufbaut. Dieses erlaubt, mit sehr geringen Schlauchstärken arbeiten zu können. Der Schlauch oder andere elastisches Material kann aber auch fest mit der Wand verbunden werden, beispielsweise durch Kleben.

Eine Weiterbildung der Erfindung schafft einen Behälter dergestalt, daß dieser eine Öffnung zum Entweichen des Gases aus dem Behälter aufweist, die eine eingesetzte Kartusche unter Gasdruck mit einem Abschnitt, insbesondere einem elastischen Abschnitt, abdichtet. Dieses erhöht die Betriebssicherheit der Trocknungsanlage. Es wird verhindert, daß sich ein Druck in dem Behälter aufbauen kann, obwohl kein Adsorptionsmittel enthalten ist. Sollte versucht werden, die Trockenanlage zwar mit einer eingesetzten Kartusche in dem Behälter zu betreiben, ohne daß die Kartusche das Adsorptionsmittel enthält, wird in einer Weiterentwicklung die Dichtwirkung zwischen der Kartusche und dem Behälter aufgehoben, sofern das Adsorptionsmittel aus der Kartusche entnommen worden ist.

Eine Umstellung des Adsorptionsmittels von Adsorptions- auf Regenerationsbetrieb und umgekehrt, erfolgt üblicherweise in festen Zeitintervallen unabhängig von der tatsächlichen Feuchtebeladung. Eine an die aktuellen Betriebsbedingungen angepaßte Fahrweise der Anlage, wird durch Mittel zur Ermittlung und/oder Anzeige des Adsorptionsmittelzustandes sichergestellt, die die Kartusche und/oder der Behälter aufweist. Die Feststellung des Adsorptionsmittelzustandes erfolgt vorteilhafterweise durch eine kapazitive Messung. Andere Meßmöglichkeiten, beispielsweise Messung des Feuchtegrades, chemische Wirkung oder ähnliches, sind ebenfalls in der Kartusche bzw. dem Behälter anwendbar. Die so gewonnenen Daten können dann an eine entsprechende Steuereinheit weitergegeben werden.

Eine Möglichkeit, Signale bezüglich des Adsorptionsmittelzustandes aus der Kartusche über den Behälter zu einer entsprechenden Kontrollstelle der Trocknungsanlage weiterleiten zu können, besteht darin, daß die Kartusche entsprechend mit dem Behälter verbunden ist. Weiterhin ist es zur Sicherstellung der Gaszuführung in die Kartusche vorteilhaft, wenn diese mit einem Deckel des Behälters verbunden ist. Diese Verbindung ist leicht herstellbar und auch abdichtbar. Außerdem gestattet dieses, eine oder mehrere, miteinander verbundene Kartuschen in dem Behälter am Deckel hängend anzuordnen. So wird vom Deckel durch die Kartuschen ein Strömungsweg vorgegeben, wobei der Druck des Gases aufgrund der hängenden, nach unten zumindest teilweisen offenen Anordnung im Behälter auch in diesem selbst zumindest zum Teil wirkt.

Weitere Vorteile, Merkmale und Eigenschaften der Erfindung werden nun anhand von bevorzugten Ausführungsbeispielen in der folgenden Zeichnung näher erläutert. Zusätzliche vorteilhafte Ausgestaltungen ergeben sich durch zweckmäßige Kombinationen von Merkmalen der dargestellten erfindungsgemäßen Ausführungen. Es zeigen:
- Fig. 1: eine erfindungsgemäße Kartusche.
- Fig. 2: die Kartusche aus Fig. 1 in einer Aufsicht.
- Fig. 3: einen Schnitt entlang der Schnittebene III-III in Fig. 1,
- Fig. 4: eine Prinzipskizze der Anordnung einer Kartusche in einem Behälter einer Trocknungsanlage,
- Fig. 5, 6, 7: jeweils eine weitere erfindungsgemäße Kartusche,
- Fig. 8: eine mögliche Verbindung zwischen zwei Kartuschen,
- Fig. 9: mehrere gestapelte Kartuschen in einem Behälter,
- Fig. 10: eine Prinzipskizze der Strömungsführung innerhalb der in Fig. 9 dargestellten Kartuschen,
- Fig. 11: eine Öffnung als Sicherungsöffnung in einem Behälter, verschlossen durch eine eingesetzte erfindungsgemäße Kartusche,
- Fig. 12, 13, 14: verschiedene Dichtungsgestaltungen bei einer Kartusche,
- Fig. 15: eine zumindest teilweise wiederverwendbare Kartusche mit einer Anzeige des Adsorptionsmittelzustandes des innerhalb der Kartusche befindlichen Adsorptionsmittel,
- Fig. 16: eine weitere Ausgestaltung der Erfindung bzgl. einer Übertragung einer Information des Adsorptionsmittelzustandes,
- Fig. 17: eine hängende Anordnung von Kartuschen an einem Dekkel eines Behälters der Trocknungsanlage, und
- Fig. 18, 19: jeweils eine Prinzipskizze eines Befüllungsverfahrens einer Kartusche mit einem Schüttgut als Adsorptionsmittel.

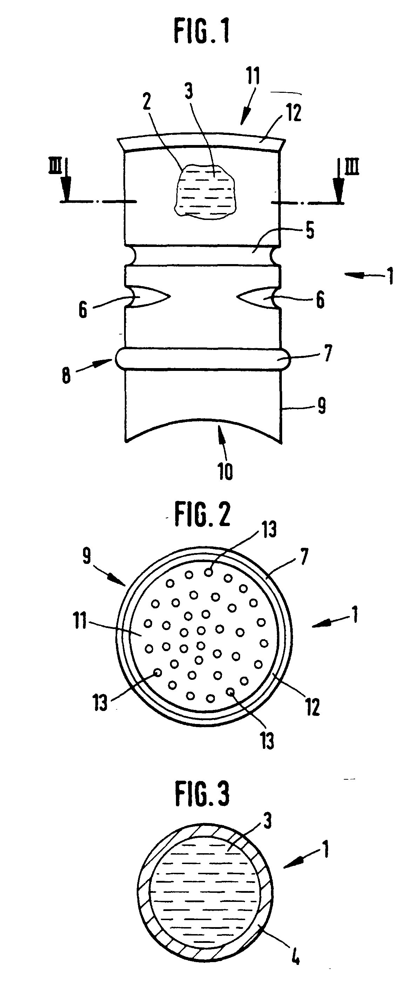

Fig. 1 zeigt eine Ausgestaltung einer erfindungsgemäßen Kartusche 1. Die innen hohle Kartusche enthält das in dem Ausschnitt 2 dargestellte Adsorptionsmittel 3. Die Kartuschenwand 4 weist eine umlaufende Nut 5, teilweise umlaufende Sicken 6 sowie einen umlaufenden Wulst 7 auf. Diese sorgen einzeln und, insbesondere wie hier dargestellt, auch zusammen dafür, daß durch geeignete Vorspannung der Kartusche 1 das Adsorptionsmittel 3 so gepreßt wird, daß es sich nicht in der Kartusche 1 bewegen kann. Beispielsweise kann zur Druckaufbringung die Wulst 7 aus einem anderen Material oder auch beim Herstellungsprozeß der Kartusche mit einem anderen Elastizitätskoeffizienten ausgestattet worden sein. Dieses erlaubt, einen oder mehrere Wandabschnitte 8 der Kartusche 1 zu bestimmen, die über ein besonderes Verformungsvermögen verfügen. Wulste 7 oder ähnliches können nach innen oder nach außen liegen, je nachdem, wie eine Ausgleichsbewegung gewünscht wird.

Die in Fig. 1 dargestellte Form der Kartusche 1 weist noch mehrere andere Vorteile auf. Die Kartusche 1 besitzt eine längliche zylinderförmige Grundform 9 mit einer ersten 10 und einer zweiten 11 Stirnfläche. Beide Stirnflächen 10, 11 sind gewölbt, wobei in dieser Ausgestaltung die jeweilige Wölbung in eine Richtung zeigt. Auf diese Weise hat die Kartusche 1 ein Mama-Papa-System zum eindeutigen Aufstapeln von baugleichen Kartuschen 1. Eine Verwechslung der Durchströmungsrichtung durch die Kartusche 1 wird dadurch ausgeschlossen. Weiterhin sind die Stirnflächen 10, 11 aufgrund ihrer Wölbung in der Lage, den auf sie wirkenden Druck günstig auf die zylinderförmige Grundform 9 zu übertragen. Diese Kartusche 1 ist daher in der Lage, auch hohe Drücke zwischen dem Adsorptionsmittel 3 und der Kartusche 1 zu gestatten. Zur Vermeidung von Gasverlusten bei aufeinandergestapelten Kartuschen 1 weist die zweite Stirnfläche 11 eine Dichtung 12 auf. Diese ist so ausgebildet, daß durch Aufsetzen einer zweiten Kartusche 1 auf die dargestellte erste Kartusche 1 mittels quasi Einklicken der dann gegenüberliegenden Stirnflächen 10, 11 der Gasstrom zwischen beiden Kartuschen 1 abgedichtet ist.

Fig. 2 zeigt die Kartusche 1 aus Fig. 1 in einer Ansicht von oben. Neben der Dichtung 12 sowie dem Wulst 7 sind eine Vielzahl an Durchgängen 13 zu erkennen. Diese sind so auf der zweiten Stirnfläche 11 angeordnet, daß eine vollständige Beaufschlagung der Querschnittsfläche des Adsorptionsmittels innerhalb der nun deutlich sichtbaren zylinderförmigen Grundform 9 erreicht wird. Die Durchgänge 13 besitzen eine derartige Größe, daß zum einen der Druckverlust zum Durchströmen gering ist, zum anderen bei einem Schüttgut als Adsorptionsmittel 3 dieses nicht in der Lage ist, durch die Durchgänge 13 auszutreten. Der Innenraum der Kartusche 1 wird daher vorteilhafterweise ohne weiteres Rückhaltefilter vollständig mit Adsorptionsmittel 3 gefüllt, so daß von allen Innenwänden der Kartusche 1 Druck ausgeübt wird.

Fig. 3 zeigt einen Schnitt durch die in Fig. 1 dargestellte Kartusche 1. Das Adsorptionsmittel 3 ist so dicht gepackt in der Kartusche 1 angeordnet, daß es im Zusammenspiel mit der Kartuschenwand 4 auch bei den unterschiedlichsten äußeren Einflüssen wie Druckstöße. Temperaturänderungen oder Vibratitionen seine fixierte Position nicht verlassen kann. Eine vorteilhafte Ausgestaltung der Kartusche 1 sieht vor, daß das Material der Kartuschenwand 4 mit dem Material des Adsorptionsmittels 3 übereinstimmt oder aus Keramik, vorzugsweise Keramin ist. Bei Temperaturveränderung weisen dann das Adsorptionsmittel 3 und die Kartusche 1 ein zumindest in etwa gleiches Dehnungsverhalten auf.

In einer weiteren, hier nicht dargestellten Ausführungsform liegt das Adsorptionsmittel 3 als Granulat vor, daß untereinander verklebt oder vergossen ist. Dadurch liegt dieses absolut fest in Kartusche 1.

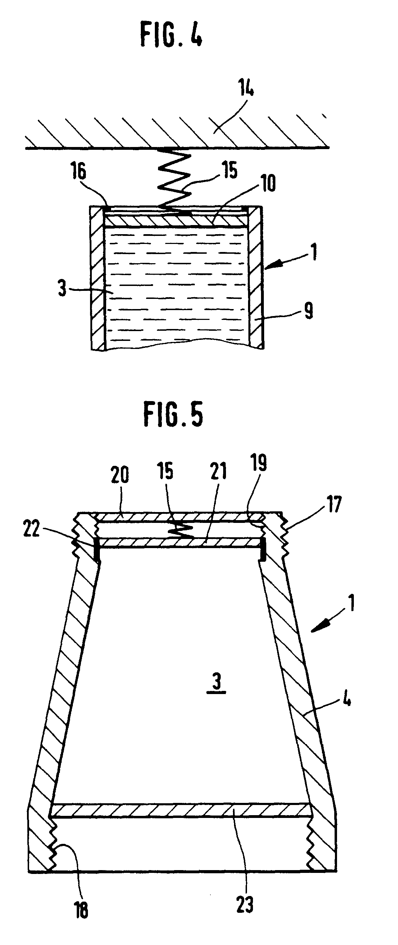

Fig. 4 zeigt eine weitere erfindungsgemäße Kartusche 1, die in einem nur teilweise dargestellten Behälter 14 angeordnet ist. Die Kartusche 1 hat eine erste Stirnfläche 10, die beweglich in der zylinderförmigen Grundform 9 angeordnet ist. Bei Einsetzen dieser Kartusche 1 in den Behälter 14 wird als druckausübendes Mittel 15 eine Feder gespannt. Diese bewirkt, daß die Stirnfläche 10 permanent auf das Adsorptionsmittel 3 drückt. Die Feder 15 ist vorteilhafterweise so ausgelegt und am Behälter 14 angebracht, daß eine hier nicht näher dargestellte Grundbefestigung von der Kartusche 1 an dem Behälter mit relativ geringer Kraft erfolgt, die letztendliche Befestigung am Behälter 14 schließlich eine derartige Druckkraftausübung der Feder 15 erlaubt, daß auch bei hohen Gasgeschwindigkeiten durch die Kartusche 1 keine Fluidisierung des Adsorptionsmittels 3 stattfindet. Damit während des Transportes der Kartusche 1 das Adsorptionsmittel 3 nicht aus der Kartusche 1 austreten kann, weist die Kartusche 1 einen Vorsprung 16 auf, der den Weg der Stirnfläche 10 begrenzt.

Fig. 5 zeigt ebenfalls eine erfindungsgemäße Ausgestaltung einer Kartusche 1. Diese besitzt ein Außengewinde 17, ein erstes Innengewinde 18 und ein zweites Innengewinde 19. Auf das Außengewinde 17 wird eine in etwa baugleiche Kartusche 1 mit dem dortigen ersten Innengewinde 18 aufgeschraubt. Dieses ermöglicht eine besondere sichere Verbindung von zwei Kartuschen, wobei die Dichtwirkung der Verschraubung unter Umständen durch geeignete Dichtungen verstärkt werden kann. Auf das zweite Innengewinde 19 ist eine erste Stirnplatte 20 geschraubt. welches als ein Widerlager für ein druckausübendes Mittel 15, dargestellt als Feder, dient. Eine zweite Stirnplatte 21 wiederum drückt auf das Adsorptionsmittel 3. Dabei gleitet sie am Rand auf Gleitflächen 22, die zum einen den Reibungswiderstand gering halten, zum anderen im Zusammenspiel mit der zweiten Stirnplatte 21 eine ausreichende Dichtwirkung ergeben.

Das System aus erster Stirnplatte 20, druckausübendem Mittel 15, zweiter Stirnplatte 21 und gegenüberliegender dritter Stirnplatte 23 ermöglicht durch Verstellung der ersten Stirnplatte 20 eine Variabilität des auf das Adsorptionsmittel 3 wirkenden Druckes. Insbesondere erlaubt dieses, eine Kartusche 1 für verschiedene Adsorptionsmittel 3 verwenden zu können. Je nach notwendigem Druck zwischen dem Adsorptionsmittel 3 und der Kartuschenwand 4 ist die erste Zwischenwand 20 einstellbar. Dieses dargestellte Prinzip, ebenso wie der Gedanke der Einstellung der Druckkräfte des druckausübenden Mittels 15, sind auch auf andere erfindungsgemäße Ausgestaltungen übertragbar. Die dargestellte Kartusche 1 besitzt weiterhin eine konische Form, wodurch sich eine derartige Kartusche 1 auch als Endkartusche für einen Stapel anbietet. Dieses erleichtert den Anschluß an den nicht näher dargestellten Behälter aufgrund der konischen Führung.

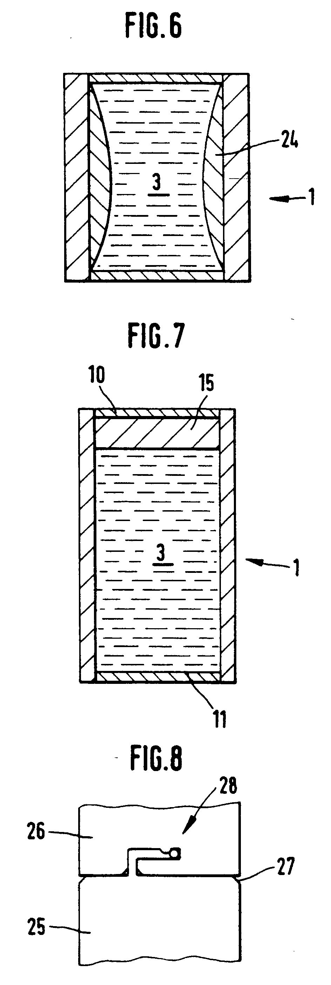

Figur 6 zeigt eine weitere Ausgestaltung einer Kartusche 1 im Querschnitt. Im Inneren der Kartusche 1 befindet sich das Adsorptionsmittel 3 unter Druck. Dieser Druck wird durch ein elastisches Material 24 verursacht, welches zumindest teilweise das Innere der Kartusche 1 auskleidet. Beim Befüllen dieser Kartusche 1 wird das elastische Material 24. beispielsweise Kautschuk, zusammengedrückt, das Adsorptionsmittel eingefüllt, unter Druck die Kartusche 1 verschlossen, so daß bei anschließender Entnahme der Kartusche aus der Druckumgebung ein für die Fixierung des Adsorptionsmittels 3 notwendiges Kräfteverhältnis bestehen bleibt. Eine vorteilhafte Ausbildung des elastischen Materials 24 weist dieses mit Füllräumen auf, die gasgefüllt sind. Bei Beaufschlagung mit hohem Druck quetschen sich diese Hohlräume zusammen, wodurch ein größerer Innenraum in der Kartusche 1 zur Befüllung zur Verfügung steht. Eine Weiterbildung einer derartigen Ausgestaltung weist eine elastische Folie auf, die eine abgeschlossene Gasblase im Inneren der Kartusche 1 bildet.

Figur 7 zeigt eine weitere Möglichkeit, ein druckausübendes Mittel 15 in einer Kartusche 1 anzuordnen. Hierbei handelt es sich um eine Schaumstruktur 15, die aufgrund ihrer Elastizität auch über längere Standzeiträume in der Lage ist, den notwendigen Druck auf das Adsorptionsmittel 3 auszuüben. Zur Sicherstellung des Gasdurchflusses durch die Kartusche 1 an der ersten Stirnfläche 10 und der zweiten Stirnfläche 11 besitzt die schaumartige Struktur 15 durchgehende Strömungskanäle, die je nach Herstellung und Material dieses Schaumes 15 so fein sind, daß ein als Adsorptionsmittel 3 verwendetes Schüttgut weder durch diese austreten noch diese verstopfen kann.

Figur 8 zeigt eine Lösung, durch die sichergestellt wird, daß aufeinander stapelbare Kartuschen 1 strömungsdicht miteinander verbunden sind. Auf einer ersten Kartusche 25 ist eine zweite Kartusche 26 aufgesetzt worden. Das Aufsetzen beider wird durch eine Schrägführung 27 an der ersten Kartusche 25 erleichtert. Durch Verdrehen unter gleichzeitiger Druckausübung wird ein Bajonettverschluß 28 geschlossen. Dieses bietet den Vorteil, daß die erste 25 und die zweite 26 Kartusche unter gegenseitiger Druckausübung miteinander verbindbar sind. Dieses kann durch eine geeignete, zwischen beide Kartuschen 25, 26 eingelegte, hier nicht näher dargestellte Dichtung unterstützt oder sogar durch Quetschung dieser verursacht werden. Neben dem dargestellten Bajonettverschluß 28 bieten sich für die Verbindung von mehreren Kartuschen auch ähnliche Lösungen an, die durch relatives Drehen zwischen der ersten Kartusche 25 zur zweiten Kartusche 26 eine Druckausbildung erreichen.

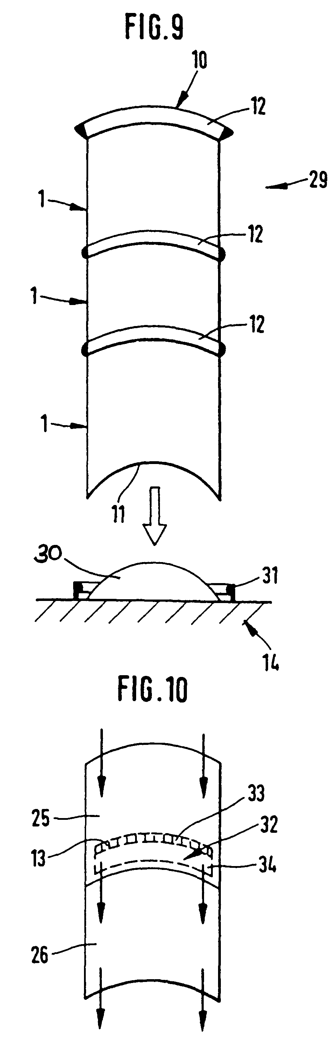

Figur 9 zeigt einen Stapel aus drei Kartuschen 1, die jeweils eine Dichtung 12 besitzen. Dieser Stapel 29 wird in Richtung des eingezeichneten Pfeiles in dem dargestellten Abschnitt des Behälters 14 eingesetzt. Die jeweils freie erste Stirnfläche 10 und zweite Stirnfläche 11 bilden den jeweiligen Gasein-bzw. Gasauslaß, je nach Strömungsrichtung des Gases. Zwischen den Kartuschen 1 kann kein Gasstrom entweichen. Bei der dargestellten Anordnung des Stapels 29 im Behälter 14 wird die zweite Stirnfläche 11 auf einer formmäßig angepaßten Kuppel 30 aufgesetzt. Die Kuppel 30 weist nicht näher dargestellte Gasdurchgänge auf, durch die ein Gas in den aufgesetzten Stapel 29 gelangt. Ein gasdichter Abschluß von dieser Kuppel 30 mit der zweiten Stirnfläche 11 wird durch die umlaufende Dichtung 31 sichergestellt, die am Behälter 14 angebracht ist. Die Dichtwirkung wird bei Abstützung des Stapels 29 auf dem Boden des Behälters 14 durch die wirkende Schwerkraft unterstützt, wenn bezüglich der ersten Stirnfläche 10 keine tragende Konstruktion durch den Behälter 14 vorgegeben ist, mit dem der Stapel 14 ebenfalls verbunden ist. Ein nach oben zumindest teilweise offener Stapel ist insbesondere deswegen sinnvoll, um im Behälter 14 den Druck des Gases zu haben und nur die Behälterwand als Druckbehälter ausbilden zu brauchen.

Figur 10 zeigt die prinzipielle Strömungsführung zwischen einer ersten Kartusche 25 und einer zweiten Kartusche 26. Das Gas, angedeutet durch die Pfeile, wird zwischen den beiden Kartuschen 25, 26 möglichst nicht umgeleitet, sondern bestreicht gleichmäßig den jeweils vollständigen Adsorptionsmittelquerschnitt der Kartusche 25, 26. Zur Sicherstellung einer möglichst günstigen Strömungsführung in einer Kartusche weist diese, je nach Konstruktion, eine entsprechende Gasverteilungseinrichtung 32 auf, wie hier gestrichelt innerhalb der Kartusche 25 angedeutet. Die Gasverteilungseinrichtung 32 kann aus einem Hohlraum 34 und einer, mit duschenförmig verteilten Durchgängen 13 bestückten, innenliegenden Innenplatte 33 bestehen. Dieser Aufbau der Gasverteilungseinrichtung 32 stellt sicher, daß das zu trocknende Gas nicht nur in der Mitte, sondern auch am Rand der Kartusche 25 durchströmt.

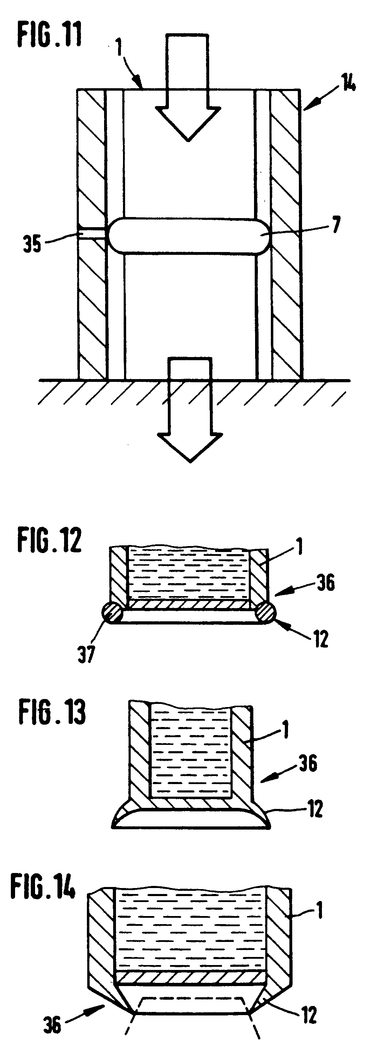

Figur 11 zeigt eine Sicherungsöffnung 35 im Behälter 14, wobei die in dem Behälter 14 angeordnete Kartusche 1 einen elastischen umlaufenden Wulst 7 hat. Bei Druckbeaufschlagung der Kartusche 1 mit dem zu trocknenden Gas, angedeutet durch die Pfeile, wird die Wulst 7 nach außerhalb der Kartusche 1 gedrückt. Dabei verschließt sie die Sicherungsöffnung 35. Diese hat die Aufgabe, den Betrieb der Trocknungsanlage ohne eingesetzte Kartusche 1 zu verhindern, indem ansonsten das Gas aus dem Behälter 14 ausströmt. Die Wulst 7 ist vorteilhafterweise umlaufend, so daß zum einen keine genaue abschnittsweise Positionierung der Kartusche 1 im Behälter 14 notwendig ist. Bei Anordnung der Wulst 7 in der Mitte der Kartusche 1 in genauer Abstimmung zur Anordnung der Sicherungsöffnung 35 im Behälter 14 ist auch die Drehung der Kartusche 1 um 180° möglich, ohne daß dieses Sicherungsmittel seinen Nutzen verliert. Natürlich kann zur Abdichtung auch ein anderer Abschnitt der Kartusche 1 dienen. Eine weitere Ausgestaltung sieht vor, daß die Kartusche 1 mit dem Behälter 14 verschraubt wird, wobei aufgrund der Verschraubung eine oder mehrere entsprechende Sicherungsöffnungen abgedichtet werden. Eine andere Ausgestaltung der Kartusche 1 sieht vor, daß diese zumindest einen faltenbalgartigen Abschnitt besitzt, welcher vorzugsweise über ein anderes Elastizitätsvermögen als die nicht faltenbalgartigen Abschnitte der Kartusche 1 verfügen. Zumindest einer dieser Faltenbalge kann dann eine entsprechend der umlaufenden Wulst 7 gleichartige Wirkung besitzen.

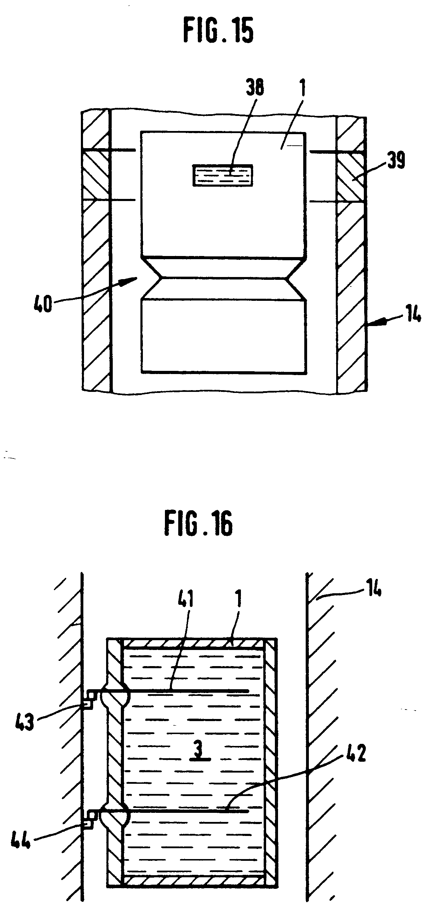

Figur 12, Figur 13 und Figur 14 zeigen Ausgestaltungen von Dichtungen 12, die sich am Ober- und/oder Unterrand einer Kartusche 1 befinden. Bei der Figur 12 weist der dargestellte Unterrand 36 eine elastomere Dichtung 37 auf, die aufgrund ihrer wulstartigen Form beim Aufsetzen der Kartusche 1 auf einer anderen Kartusche oder auf einem Boden gequetscht und dadurch eine gasdichte Wirkung erzielt. Die in Figur 13 und Figur 14 dargestellten Dichtungen 12 am Unterrand der jeweiligen Kartusche 1 sind werkstoffmäßig Bestandteil der Kartusche 1. Je nach Herstellungsverfahren derselben können diese Dichtungen 12 trotz des gleichen Materials wie die übrigen Wände der Kartusche 1 andere Elastizitätseigenschaften aufweisen. Bei Kunststoffen ist dieses beispielsweise über entsprechende Temperaturen oder Zugaben regelbar. Während die in Figur 13 dargestellte Dichtung besonders bei aufzusetzenden Kartuschen 1 bevorzugt wird, wird die Dichtung in Figur 14 in Form einer Dichtlippe besonders für anzuschließende Kartuschen verwendet, gestrichelt angedeutet.

Figur 15 zeigt eine zumindest teilweise recycelbare Kartusche 1 mit einer Anzeige 38 bezüglich des Adsorptionsmittelzustandes. Die Anzeige 38 ist im Behälter 14 durch Einsetzen der Kartusche 1 so anordbar, daß von außerhalb des Behälters 14 die Anzeige 38 durch ein umlaufendes Sichtfenster 39 beobachtet werden kann. Der Betreiber der Trocknungsanlage wird dadurch in die Lage versetzt, ohne aufwendige Mittel den Zustand des Adsorptionsmittels in der Kartusche 1 beurteilen zu können. Bei aufeinander gesetzten Kartuschen ist eine derartige Anzeige in einer vorteilhaften Ausgestaltung nur für eine Kartusche 1 notwendig. Vom Zustand dieser Kartusche 1 kann auf den Gesamtzustand des Stapels an Kartuschen rückgeschlossen werden. Auf diese Weise kann beispielsweise entschieden werden, wann ein hier nicht dargestellter Stapel an Kartuschen 1 regeneriert werden muß. Die Möglichkeit zur Anzeige besteht durch Änderung der Farbe an der Anzeige 38 aufgrund einer chemischen Wirkung durch die Feuchtadsorption. Die dargestellte Kartusche 1 ist so aufgebaut, daß sie eine vorgegebene Fuge 40 aufweist. Die Fuge 40 ist eine vorgegebene Bruchstelle, an der die Kartusche 1 geöffnet, d. h. teilweise zerstört werden kann. So kann der Teil der Kartusche 1 mit der Anzeige 38 wiederverwendet werden, während der andere Teil unter Umständen ersetzbar ist. Dadurch kann das Adsorptionsmittel in der Kartusche 1 ausgetauscht werden, wenn es nicht mehr regenerierbar ist. Insbesondere vorteilhaft ist es, wenn das Adsorptionsmittel nur dann aus der Kartusche 1 entnehmbar ist, wenn diese zerstört wird. Damit wird sichergestellt, daß keine Falschhandhabung von schon verbrauchten oder nicht mehr gefüllten Kartuschen 1 stattfindet. In einer Weiterentwicklung des Recyclinggedankens weist die Kartusche 1 ein abnehmbares Teil auf, was wieder aufgesetzt wird, ohne daß dafür die Kartusche 1 zerstört werden muß. Dieses ist beispielsweise mit einer Verschraubung möglich.

Figur 16 zeigt eine Kartusche 1 in einem Behälter 14, die mit einem ersten 41 und einem zweiten 42 elektrischen Leiter ausgestattet ist. Diese dienen zur kapazitiven Messung des Adsorptionsmittelzustandes. Durch entsprechende Vergleichskurven kann auf den jeweiligen Zustand des Adsorptionsmittels 3 in der Kartusche 1 geschlossen werden. Dieses geschieht vorzugsweise automatisch, wobei die elektrischen Leiter 41, 42 über einen ersten 43 und zweiten 44 Kontakt an der Behälterinnenwand mit einer nicht näher dargestellten Kontrolleinrichtung verbunden sind. Eine weitere Möglichkeit der Messung des Adsorptionsmittelzustandes besteht darin, den Gasstrom selbst auf seinen Feuchtegehalt zu untersuchen. Dazu können geeignete Mittel im Behälter 14, beispielsweise in einem Strömungskanal, angeordnet sein.

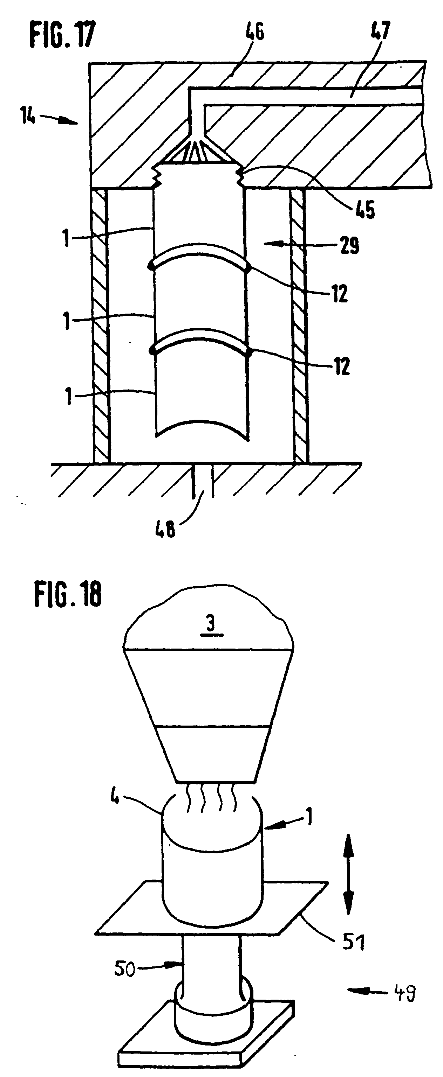

Figur 17 zeigt einen Stapel 29, der über ein Gewinde 45 mit einem Deckel 46 des Behälters 14 verbunden ist. Im Deckel 46 ist eine Gasleitung 47 untergebracht, die ein Zu- bzw. Abführen des Gases aus dem Behälter 14 gestattet. Der Stapel 29 hängt im Innenraum des Behälters 14. Dieses ermöglicht, daß bei Abnahme des Deckels 46 auch gleichzeitig der Stapel 29 aus dem Behälter 14 entnommen wird. Dadurch entstehen keinerlei Probleme aufgrund von unter Umständen zu fest sitzenden Dichtungen, wie sie bei einer Befestigung am Boden des Behälters 14 notwendig wären. Der Behälter 14 und der Stapel 29 sind so abgedichtet, daß das Gas nur über die Gasleitung 47 sowie die Bodenleitung 48 in den Behälter 14 ein- bzw. ausströmen kann. Bypassströme aus dem Stapel 29 werden durch Dichtungen 12 zwischen den Kartuschen 1 verhindert. In einer weiteren, nicht näher dargestellten Ausführungsform wird auf dem Stapel 29 der mit einer entsprechenden Führung und Dichtung ausgestattete Deckel 46 übergestülpt. Die Dichtung ist dabei so ausgelegt, daß sie eine Gasdichtigkeit aufgrund von ihrer Quetschung durch die Führung und den Stapel 29 gewährleistet. Die dabei auftretenden Kräfte können so groß sein, daß eine derartige Konstruktion in der Lage ist, den Stapel 29 am Deckel 46 noch unten freihängend zu halten. Ansonsten kann der Stapel 29 auch auf einem entsprechenden Vorsprung auf dem Behälterboden so aufgesetzt werden, daß eine Druckübertragung vom Gas in den Behälter 14 sichergestellt ist. Eine bevorzugte Ausgestaltung einer Kartusche läßt sich ebenfalls gut an einen Deckel 46 des Behälters 14 befestigen. Am äußeren Rand oben und/oder unten weist eine derartige Kartusche eine Dichtung auf und beispielsweise in die Mitte der Stirnfläche ein Gewinde bzw. einen Gewindestift. Dadurch können zwei Kartuschen ebenfalls durch relatives Verdrehen miteinander verbunden werden.

Figur 18 zeigt ein Befüllungsverfahren einer Kartusche 1, bei der die Kartusche auf einer Vorrichtung 49 eingespannt ist. Die Vorrichtung 49 besitzt ein Zylindersystem 50, wodurch ein daran befestigter Spanntisch 51 in Vibration versetzt werden kann, angedeutet durch den Pfeil. Das Adsorptionsmittel 3 wird nun in die Kartusche 1 eingefüllt und verteilt sich aufgrund der wirkenden Vibrationen äußerst gleichmäßig innerhalb der Kartusche 1. Bei gleichzeitiger Vorspannung der Kartuschenwand 4, beispielsweise durch nicht dargestellte Zugeinrichtungen, wird schließlich erreicht, daß nach Verschließen der Kartusche 1 ein permanenter Druck zwischen dem in der Kartusche 1 befindlichen Adsorptionsmittel 3 und der Kartuschenwand 4 herrscht.

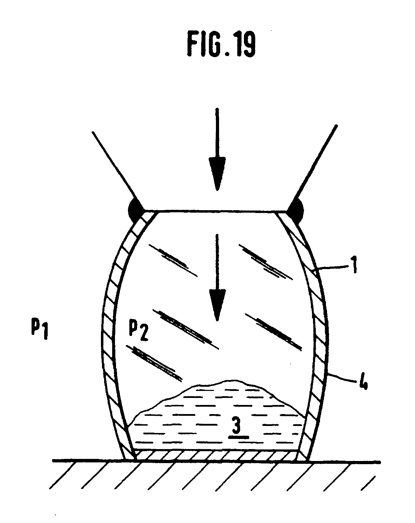

Figur 19 zeigt ein zweites Befüllungsverfahren einer Kartusche 1. Das Adsorptionsmittel 3 wird unter einem im Inneren der Kartusche 1 wirkenden Druck p2 eingefüllt, während auf der Außenwandung der Kartusche 1 der Druck p1 herrscht. Da der Druck p2 gegenüber dem Druck p1 größer ist, weitet sich die Kartuschenwand 4. Dadurch ist es möglich, mehr Adsorptionsmittel 3 einzufüllen, als wenn ein Druck p1 im Inneren der Kartusche 1 wirken würde. Nach vollständiger Befüllung der Kartusche 1 wird diese verschlossen, so daß eine permanente Spannung in den Kartuschenwänden 4 vorliegt. Diese sorgt dafür, daß das Adsorptionsmittel 3 nicht in der Lage ist, sich zu lockern oder sich zu bewegen. Dieses Befüllungsverfahren zeigt eine Möglichkeit, wie die Kartuschenwand 4 unter Vorspannung gesetzt wird, die bei Entlastung eine Volumenverringerung in der Kartusche 1 bewirken will.

Die vorliegende Erfindung schafft eine vorteilhafte Anordnung des Adsorptionsmittels in dem Behälter einer Trocknungsanlage. Die Verwendung einer Kartusche ermöglicht eine schnelle und sichere Austauschbarkeit des Adsorptionsmittels vor Ort. Weiterhin sichert die Erfindung eine hohe Qualität der Gastrocknung, insbesondere ohne zusätzliche Gefahr der Partikelfreisetzung. Unterschiedliche Kartuschen können auch mit verschiedenen Adsorptionsmitteln so optimal zusammengestellt an unterschiedlichsten Trocknungsanlagen eingesetzt werden.

### Bezugszeichenliste

- 1: Kartusche
- 2: Ausschnitt
- 3: Adsorptionsmittel
- 4: Kartuschenwand
- 5: umlaufende Nut
- 6: teilweise umlaufende Sicke
- 7: umlaufender Wulst
- 8: Wandabschnitt
- 9: zylinderförmige Grundform
- 10: erste Stirnfläche
- 11: zweite Stirnfläche
- 12: Dichtung
- 13: Durchgang
- 14: Behälter
- 15: druckausübendes Mittel, Feder, elastisches Material
- 16: Vorsprung
- 17: Außengewinde
- 18: erstes Innengewinde
- 19: zweites Innengewinde
- 20: erste Stirnplatte
- 21: zweite Stirnplatte
- 22: Gleitfläche
- 23: dritte Stirnplatte
- 24: elastisches Material
- 25: erste Kartusche
- 26: zweite Kartusche
- 27: Schrägführung
- 28: Bajonettverschluß
- 29: Stapel
- 30: Kuppel
- 31: umlaufende Dichtung am Behälter
- 32: Gasverteilungseinrichtung
- 33: Innenplatte
- 34: Hohlraum
- 35: Sicherungsöffnung
- 36: Unterrand
- 37: Elastomerdichtung
- 38: Anzeige des Adsorptionsmittelzustandes
- 39: umlaufendes Sichtfenster
- 40: Fuge
- 41: erster elektrischer Leiter
- 42: zweiter elektrischer Leiter
- 43: erster Kontakt
- 44: zweiter Kontakt
- 45: Gewinde
- 46: Deckel
- 47: Gasleitung
- 48: Bodenleitung
- 49: Vorrichtung
- 50: Zylindersystem
- 51: Spanntisch

## Patentansprüche

1. Behälter (14) einer Trocknungsanlage, in dem ein Adsorptionsmittel (3) für ein zu trocknendes Gas angeordnet ist, mit einer ersten und einer zweiten Kartusche (25, 26) wobei in zumindest einer Kartusche (1), die in dem Behälter (14) austauschbar angeordnet ist, sich das Adsorptionsmittel (3) für das zu trocknende Gas befindet, wobei zwischen dem Adsorptionsmittel (3) und der Kartusche (1) ein derartiger Druck herrscht, daß das Adsorptionsmittel (3) in der Kartusche (1) unbeweglich ist, insbesondere auch bei einer sich ändernden Betriebs- und/oder Umgebungsbedingung, **dadurch gekennzeichnet, daß** die Kartusche (1) einen äußeren Ober- und/oder Unterrand (36) hat, der als Dichtung (12, 37) ausgebildet ist und das zu trocknende Gas zwischen der ersten Kartusche (25) und der zweiten Kartusche (26) ohne Umleitung den jeweils vollständigen Adsorptionsmittelquerschnitt der Kartuschen (25, 26) bestreicht.

2. Behälter (14) nach Anspruch 1, **dadurch gekennzeichnet, daß** die Kartusche (1) zumindest zum überwiegenden Teil aus Kunststoff besteht.

3. Behälter (14) nach Anspruch 1 oder 2, **dadurch gekennzeichnet, daß** die Kartusche (1) zumindest zum Teil aus dem gleichen Material wie das Adsorptionsmittel (3) besteht, vorzugsweise aus Keramik.

4. Behälter nach einem der vorhergehenden Ansprüche, **dadurch gekennzeichnet, daß** die Kartuschenwand (4) vorspannbar ist, wobei die Kartuschenwand (4) vorzugsweise eine zumindest teilweise umlaufende Sicke (6) und/oder unterschiedliche Wandabschnitte (8) mit unterschiedlichen Elastizitätskoeffizienten und/oder Wärmeausdehnungskoeffizienten aufweist.

5. Behälter (14) nach einem der vorhergehenden Ansprüche, **dadurch gekennzeichnet, daß** in unmittelbarer Nähe zum Adsorptionsmittel (3) ein druckausübendes, insbesondere unter eine Vorspannung setzbares Mittel (15) angeordnet ist, vorzugsweise eine Feder oder ein elastisches Material.

6. Behälter (14) nach Anspruch 5, **dadurch gekennzeichnet, daß** das Innere der Kartusche (1) zumindest teilweise mit einem elastischen Material (15, 24) ausgekleidet ist.

7. Behälter (14) nach Anspruch 6, **dadurch gekennzeichnet, daß** das Innere der Kartusche (1) zumindest teilweise mit einem elastischen Schlauch ausgelegt ist.

8. Behälter (14) nach einem der vorhergehenden Ansprüche, **dadurch gekennzeichnet, daß** in diesem auf eine erste Kartusche (25) die zweite Kartusche (26) stapelbar ist, insbesondere so, daß eine Strömungsführung von der ersten (25) zu der zweiten (26) Kartusche gewährleistet ist und die Verbindung der beiden Kartuschen (25, 26) untereinander zum Behälter (14) hin im wesentlichen gasdicht ist.

9. Behälter (14) nach Anspruch 8, **dadurch gekennzeichnet, daß** die erste (25) und die zweite Kartusche (26) zumindest partiell baugleich sind, insbesondere so, daß diese ein Mama-Papa-System zur beiderseitigen Verbindung aufweisen.

10. Behälter (14) nach einem der vorhergehenden Ansprüche, **dadurch gekennzeichnet, daß** der Behälter (14) eine Öffnung (35) zum Entweichen des Gases aus dem Behälter (14) aufweist, die die eingesetzte Kartusche (1) mit einem Abschnitt (7), insbesondere einem elastischen Abschnitt, abdichtet.

11. Behälter (14) nach einem der vorhergehenden Ansprüche, **dadurch gekennzeichnet, daß** die Kartusche (1) und/oder der Behälter (14) Mittel (38, 39) zur Ermittlung und/oder Anzeige des Adsorptionsmittelzustandes hat.

12. Behälter (14) nach Anspruch 11, **dadurch gekennzeichnet, daß** die Kartusche (1) und/oder der Behälter (14) Mittel (41, 42, 43, 44) zur kapazitiven Messung des Adsorptionsmittelzustandes aufweist.

13. Behälter (14) nach einem der vorhergehenden Ansprüche mit mehreren übereinandergestapelten Kartuschen (29), **dadurch gekennzeichnet, daß** das Adsorptionsmittel (3) von zumindest zwei Kartuschen (1) sich unterscheidet.

14. Behälter (14) nach Anspruch 13, **dadurch gekennzeichnet, daß** in Strömungsrichtung des zu trocknenden Gases durch die Kartuschen (1) die erste Kartusche ein wasserfestes Adsorptionsmittel (3) enthält.

15. Behälter (14) nach einem der vorhergehenden Ansprüche, **dadurch gekennzeichnet, daß** dieser einen Deckel (46) aufweist, der mit einer Kartusche (1) so verbindbar ist, daß eine Gaszuführung (47, 48) in die Kartusche (1) sichergestellt ist und die Kartusche (1) im Behälter (14) hängt.

16. Behälter (14) nach einem der vorhergehenden Ansprüche, **dadurch gekennzeichnet, daß** zumindest zwei Kartuschen (1) zusammen nur auf einer Linie gegen den Behälter (14) abgedichtet sind.

17. Behälter (14) nach Anspruch 16, **dadurch gekennzeichnet, daß** die Abdichtung in der Nähe der Öffnung der Gasleitung (47) und/oder Bodenleitung (48) ist.

18. Mit einer zumindest partiell baugleichen zweiten Kartusche (26) stapelbare erste Kartusche (1) für einen Behälter (14) nach einem der vorhergehenden Ansprüche, wobei in der Kartusche (1), die in dem Behälter (14) austauschbar angeordnet ist, sich das Adsorptionsmittel (3) für das zu trocknende Gas befindet und zwischen dem Adsorptionsmittel (3)und der Kartusche (1) derartiger Druck herrscht, daß das Adsorptionsmittel (3) in der Kartusche (1) unbeweglich ist, insbesondere auch bei einer sich ändernden Betriebs- und/oder Umgebungsbedingung, **dadurch gekennzeichnet, daß** sich an der Wandung der Kartusche (1) ein äußeren Ober- und/oder Unterrand (36) befindet, der als Dichtung (12, 37) ausgebildet ist, so daß ein zu trocknendes Gas zwischen der ersten Kartusche (25) und der zweiten Kartusche (26) ohne Umleitung den jeweils vollständigen Adsorptionsmittelquerschnitt der Kartuschen (25, 26) bestreicht.

19. Kartusche (1) für einen Behälter (14) nach Anspruch 18, **dadurch gekennzeichnet, daß** die Kartusche (1) einen Schraub- (17, 18, 45) oder Bajonettverschluß (28) zur Verbindung mit einem Teil des Behälters (14) und/oder einer anderen Kartusche (1) aufweist.

20. Kartusche (1) nach Anspruch 19 für einen Behälter (14) nach einem der vorhergehenden Ansprüche, **dadurch gekennzeichnet, daß** zumindest ein Teil der Kartusche (1) nach Ersatz des Adsorptionsmittel (3) wiederverwendbar ist.

21. Kartusche (1) für einen Behälter (14) nach einem der Ansprüche, 18 bis 20 **dadurch gekennzeichnet, daß** die Kartusche (1) nur unter ihrer teilweisen Zerstörung zu öffnen ist, wobei sie dazu eine vorbestimmte Stelle (40) aufweist.

22. Kartusche (1) nach einer der Ansprüche 18 bis 21 zur Befüllung mit einem Adsorptionsmittel (3) zur Verwendung in einem Behälter (14) einer Trocknungsanlage nach einem der Ansprüche 1 bis 17.

23. Verfahren zum Befüllen einer Kartusche (1) nach einem der Ansprüche 18 bis 22 für einen Behälter (14) nach einem der Ansprüche 1 bis 17 mit einem Adsorptionsmittel (3), **dadurch gekennzeichnet, daß** als Adsorptionsmittel (3) ein Schüttgut verwendet wird, welches beim Befüllen der Kartusche (1) Vibrationen ausgesetzt wird.

24. Verfahren zum Befüllen einer Kartusche (1) nach einem der Ansprüche 18 bis 22 für einen Behälter (14) nach einem der Ansprüche 1 bis 17 mit einem Adsorptionsmittel (3), **dadurch gekennzeichnet, daß** die Kartuschenwand (4) während des Befüllens unter Vorspannung gesetzt wird, die bei Entlastung eine Volumenverringerung bewirken will.

## Claims

1. Container (14) of a drying unit in which an adsorbent (3) for a gas to be dried is arranged, with a first and a second cartridge (25, 26), where, in at least one cartridge (1) which is arranged exchangeably in the container (14), the adsorbent (3) for the gas to be dried is situated, where, between the adsorbent (3) and the cartridge (1), there is such a pressure that the adsorbent (3) is immovable in the cartridge (1), in particular even in the event of a changing operating and/or environmental condition, **characterized in that** the cartridge (1) has an external upper and/or lower edge (36) which is designed as a seal (12, 37) and the gas to be dried between the first cartridge (25) and the second cartridge (26) covers the complete adsorbent cross section of the cartridges (25, 26) without diversion.

2. Container (14) according to Claim 1, **characterized in that** the cartridge (1) is made at least for the most part of plastic.

3. Container (14) according to Claim 1 or 2, **characterized in that** the cartridge (1) is made at least partly of the same material as the adsorbent (3), preferably of ceramic.

4. Container according to one of the preceding claims, **characterized in that** the cartridge wall (4) is prestressable, said cartridge wall (4) preferably having an at least partially surrounding notch (6) and/or different wall sections (8) with different coefficients of elasticity and/or coefficients of thermal expansion.

5. Container (14) according to one of the preceding claims, **characterized in that** in immediate proximity to the adsorbent (3) there is a means (15) which exerts a pressure, and is in particular prestressable, preferably a spring or an elastic material.

6. Container (14) according to Claim 5, **characterized in that** the inside of the cartridge (1) is at least partly lined with an elastic material (15, 24).

7. Container (14) according to Claim 6, **characterized in that** the inside of the cartridge (1) is at least partly lined with an elastic tubing.

8. Container (14) according to one of the preceding claims, **characterized in that** in it the second cartridge (26) can be stacked on a first cartridge (25), in particular in such a way that a guided flow from the first (25) to the second (26) cartridge is guaranteed and the connection of the two cartridges (25, 26) is substantially gastight with respect to the container (14).

9. Container (14) according to Claim 8, chacacterized in that the first (25) and the second cartridge (26) are at least partly identical in structure, particularly in such a way that they have a male/female system for mutual connection.

10. Container (14) according to one of the preceding claims, **characterized in that** the container (14) has an opening (35) for escape of the gas from the container (14), which opening (35) is sealed off by the inserted cartridge (1) via a section (7), in particular an elastic section.

11. Container (14) according to one of the preceding claims, **characterized in that** the cartridge (1) and/or the container (14) has means (38, 39) for determining and/or displaying the state of the adsorbent.

12. Container (14) according to Claim 11, **characterized in that** the cartridge (1) and/or the container (14) has means (41, 42, 43, 44) for capacitive measurement of the state of the adsorbent.

13. Container (14) according to one of the preceding claims with a plurality of cartridges (29) stacked on one another, **characterized in that** the adsorbent (3) of at least two cartridges (1) is different.

14. Container (14) according to Claim 13, **characterized in that** in the direction of flow of the gas to be dried, through the cartridges (1), the first cartridge contains a water-resistant adsorbent (3).

15. Container (14) according to one of the preceding claims, **characterized in that** it has a lid (46) which can be connected to a cartridge (1) in such a way that a gas admission line (47, 48) into the cartridge (1) is secured and the cartridge (1) hangs in the container (14).

16. Container (14) according to one of the preceding claims, **characterized in that** at least two cartridges (1) are sealed off from the container (14) together only on one line.

17. Container (14) according to Claim 16, **characterized in that** the seal is in proximity to the opening of the gas line (47) and/or base line (48).

18. First cartridge (1) which can be stacked together with an at least partially structurally identical second cartridge (26) for a container (14) according to one of the preceding claims, where, in the cartridge (1) arranged exchangeably in the container (14), the adsorbent (3) for the gas to be dried is situated, and, between the adsorbent (3) and the cartridge (1), there is such a pressure that the adsorbent (3) is immovable in the cartridge (1), in particular even in the event of a changing operating and/or environmental condition, **characterized in that** an external upper and/oc lower edge (36) is situated on the wall of the cartridge (1) and is designed as a seal (12, 37) so that a gas to be dried between the first cartridge (25) and the second cartridge (26) covers the complete adsorbent cross section of the cartridges (25, 26) without diversion.

19. Cartridge (1) for a container (14) according to Claim 18, **characterized in that** the cartridge (1) has a screw (17, 18, 45) or bayonet closure (28) for connection to part of the container (14) and/or another cartridge (1).

20. Cartridge (1) according to Claim 19 for a container (14) according to one of the preceding claims, **characterized in that** at least part of the cartridge (1) can be reused after the adsorbent (3) has been raplaced.

21. Cartridge (1) for a container (14) according to one of Claims 18 to 20, **characterized in that** the cartridge (1) can be opened only by being partially destroyed, and it has a specific location (40) for this purpose.

22. Cartridge (1) according to one of Claims 18 to 21 for filling with an adsorbent (3) for use in a container (14) of a drying unit according to one of Claims 1 to 17.

23. Method for filling a cartridge (1) according to one of Claims 18 to 22 for a container (14) according to one of Claims 1 to 17 with an adsorbent (3), **characterized in that** the adsorbent (3) used is a bulk material which is subjected to vibrations during filling of the cartridge (1).

24. Method for filling a cartridge (1) according to one of Claims 18 to 22 for a container (14) according to one of Claims 1 to 17 with an adsorbent (3), **characterized in that** the cartridge wall (4) is prestressed during filling, which is intended to effect a reduction in volume when released.

## Revendications

1. Récipient (14) d'une installation de séchage, dans lequel est disposé un agent d'adsorption (3) pour un gaz à assécher, avec une première et une seconde cartouches (25, 26), l'agent d'adsorption (3) se trouvant dans au moins une cartouche (1) laquelle est placée de façon à pouvoir être remplacée dans le récipient (14), une pression régnant entre l'agent d'adsorption (3) et la cartouche (1) qui est telle que l'agent d'adsorption (3) ne peut se déplacer dans la cartouche (1), en particulier également en cas de condition de fonctionnement et/ou d'environnement changeante, **caractérisé en ce que** la cartouche (1) présente un bord extérieur supérieur et/ou inférieur (36) qui est conçu comme élément d'étanchéité (12, 37) et **en ce que** le gaz à assécher entre la première cartouche (25) et la seconde cartouche (26) balaie sans dévier la section transversale intégrale respective de l'agent d'adsorption des cartouches (25, 26).

2. Récipient (14) selon la revendication 1, **caractérisé en ce que** la cartouche (1) se compose au moins pour l'essentiel de plastique.

3. Récipient (14) selon la revendication 1 ou 2, **caractérisé en ce que** la cartouche (1) se compose au moins pour partie du même matériau que l'agent d'adsorption (3), et de préférence est en céramique.

4. Récipient (14) selon l'une des revendications précédentes, **caractérisé en ce que** la paroi de la cartouche (4) peut être précontrainte, la paroi de la cartouche (4) comportant de préférence une moulure (6) qui en fait le tour au moins partiellement et/ou des segments de parois différents (8) présentant différents coefficients d'élasticité et/ou différents coefficients de dilatation thermique.

5. Récipient (14) selon l'une des revendications précédentes, **caractérisé en ce qu'**est disposé à proximité immédiate de l'agent d'adsorption (3) un élément exerçant une pression, pouvant en particulier être mis sous précontrainte (15), de préférence un ressort ou un matériau élastique.

6. Récipient (14) selon la revendication 5, **caractérisé en ce que** l'intérieur de la cartouche (1) est revêtu au moins pour partie d'un matériau élastique (15, 24).

7. Récipient (14) selon la revendication 6, **caractérisé en ce que** l'intérieur de la cartouche (1) est garni au moins pour partie d'un tuyau élastique.

8. Récipient (14) selon l'une des revendications précédentes, **caractérisé en ce qu'**à l'intérieur de celui-ci la seconde cartouche (26) peut être empilée sur la première cartouche (25), en particulier de telle sorte qu'un guidage de l'écoulement de la première cartouche (25) vers la seconde cartouche (26) est garanti et que le raccord réciproque des deux cartouches (25, 26) au récipient (14) est étanche au gaz.

9. Récipient (14) selon la revendication 8, **caractérisé en ce que** la première cartouche (25) et la seconde cartouche (26) sont de construction au moins partiellement identique, en particulier de telle sorte qu'elles comportent entre elles un système de raccordement mâle-femelle.

10. Récipient (14) selon l'une des revendications précédentes, **caractérisé en ce que** le récipient (14) comporte une ouverture (35) pour l'échappement du gaz hors du récipient (14), qui étanchéifie la cartouche en place (1) avec un segment (7), en particulier un segment élastique.

11. Récipient (14) selon l'une des revendications précédentes, **caractérisé en ce que** la cartouche (1) et/ou le récipient (14) comporte(nt) des moyens (38, 39) de détection et/ou d'affichage de l'état de l'agent d'adsorption.

12. Récipient (14) selon la revendication 11, **caractérisé en ce que** la cartouche (1) et/ou le récipient (14) comporte(nt) des moyens (41, 42, 43, 44) de mesure capacitive de l'état de l'agent d'adsorption.

13. Récipient (14) selon l'une des revendications précédentes, avec plusieurs cartouches (29) empilées les unes sur les autres, **caractérisé en ce que** l'agent d'adsorption (3) d'au moins deux cartouches (1) sont différents.

14. Récipient (14) selon la revendication 13, **caractérisé en ce que** la première cartouche contient un agent d'adsorption hydrofuge (3) dans la direction de l'écoulement du gaz à assécher à travers les cartouches (1).

15. Récipient (14) selon l'une des revendications précédentes, **caractérisé en ce qu'**il comporte un couvercle (46) qui peut être relié à une cartouche (1) de telle sorte qu'une amenée du gaz (47, 48) dans la cartouche (1) est garantie et que la cartouche (1) est suspendue dans le récipient (14).

16. Récipient (14) selon l'une des revendications précédentes, **caractérisé en ce qu'**au moins deux cartouches (1) ne sont conjointement étanchéifiées que sur une ligne par rapport au récipient (14).

17. Récipient (14) selon la revendication 16, **caractérisé en ce que** l'étanchéité est réalisée à proximité de l'ouverture de la conduite de gaz (47) et/ou de la conduite de fond (48).

18. Première cartouche (1) empilable sur une seconde cartouche (26) de construction au moins partiellement identique, pour un récipient (14) selon l'une des revendications précédentes, l'agent d'adsorption (3) pour le gaz à assécher se trouvant dans la cartouche (1) placée dans le récipient (14) de façon à pouvoir être remplacée, et une pression régnant entre l'agent d'adsorption (3) et la cartouche (1) qui est telle que l'agent d'adsorption (3) ne peut se déplacer dans la cartouche (1), en particulier également en cas de condition de fonctionnement et/ou d'environnement changeante, **caractérisée en ce que** se trouve au niveau de la paroi de la cartouche (1) un bord extérieur supérieur et/ou inférieur (36) qui est conçu comme élément d'étanchéité (12, 37) de telle sorte qu'un gaz à assécher entre la première cartouche (25) et la seconde cartouche (26) balaie sans dévier la section transversale intégrale respective de l'agent d'adsorption des cartouches (25, 26).

19. Cartouche (1) pour un récipient (14) selon la revendication 18, **caractérisée en ce qu'**elle comporte une fermeture à vis (17, 18, 45) ou à baïonnette (28) pour le raccordement à une partie du récipient (14) et/ou d'une autre cartouche (1).

20. Cartouche (1) selon la revendication 19 pour un récipient (14) selon l'une des revendications précédentes, **caractérisée en ce qu'**au moins une partie de la cartouche (1) est réutilisable après remplacement de l'agent d'adsorption (3).

21. Cartouche (1) pour un récipient (14) selon l'une des revendications 18 à 20, **caractérisée en ce que** la cartouche (1) ne peut être ouverte qu'au prix de sa destruction partielle, celle-ci présentant un endroit prédéterminé (40) pour ce faire.

22. Cartouche (1) selon l'une des revendications 18 à 21, destinée à être remplie avec un agent d'adsorption (3) pour être utilisée dans un récipient (14) d'une installation de séchage selon l'une des revendications 1 à 17.

23. Procédé de remplissage d'une cartouche (1) selon l'une des revendications 18 à 22, pour un récipient (14) selon l'une des revendications 1 à 17, avec un agent d'adsorption (3), **caractérisé en ce que** l'on utilise un produit en vrac comme agent d'adsorption (3) qui est soumis à des vibrations lors du remplissage de la cartouche (1).

24. Procédé de remplissage d'une cartouche (1) selon l'une des revendications 18 à 22, pour un récipient (14) selon l'une des revendications 1 à 17, avec un agent d'adsorption (3), **caractérisé en ce que** la paroi de la cartouche (4) est mise sous précontrainte au cours du remplissage qui, au moment de son relâchement, produira une diminution de volume.
